(19) Europäisches Patentamt
European Patent Office
Office européen des brevets

(11) Publication number: 0 084 220
B1

(12) # EUROPEAN PATENT SPECIFICATION

(45) Date of publication of patent specification: **07.01.87**

(51) Int. Cl.⁴: **C 09 J 7/00,** C 09 J 3/14, C 08 J 9/00

(21) Application number: **82306389.6**

(22) Date of filing: **01.12.82**

(54) **Cellular pressure-sensitive adhesive product.**

(30) Priority: **15.01.82 US 339405**

(43) Date of publication of application: **27.07.83 Bulletin 83/30**

(45) Publication of the grant of the patent: **07.01.87 Bulletin 87/02**

(84) Designated Contracting States: **DE FR GB IT**

(56) References cited:
**FR-A-2 002 810**
**FR-A-2 124 058**
**FR-A-2 237 945**
**GB-A- 799 424**

**CHEMICAL ABSTRACTS, vol. 94, 1981, page 35, no. 4727f, Columbus Ohio (USA)**

**The file contains technical information submitted after the application was filed and not included in this specification**

(73) Proprietor: **MINNESOTA MINING AND MANUFACTURING COMPANY**
**3M Center, P.O. Box 33427**
**St. Paul, Minnesota 55133-3427 (US)**

(72) Inventor: **Esmay, Donald L.**
**2501 Hudson Road P.O. Box 33427**
**St. Paul Minnesota 55133 (US)**
Inventor: **Johnson, Gordon G.**
**2501 Hudson Road P.O. Box 33427**
**St. Paul Minnesota 55133 (US)**
Inventor: **Vesley, George F.**
**2501 Hudson Road P.O. Box 33427**
**St. Paul Minnesota 55133 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention concerns a product including a pressure-sensitive adhesive layer which is a foam, i.e., a membrane having a cellular structure.

Foam-containing pressure-sensitive adhesive tapes are widely used for mounting objects such as pictures on walls or plastic body side molding on automobiles. Such a tape typically consists of a polyurethane, polychloroprene or polyethylene foam carrying a layer of pressure-sensitive adhesive on each face. For other uses, the adhesive layer may cover only one face, e.g., a tape useful as a cushioning gasket for an automobile window.

As disclosed in Canadian Patent No. 747,341 and U.S. Patent No. 3,993,833, a mixture can be foamed against a pressure-sensitive adhesive layer or between a pair of such layers. Alternatively the mixture may be foamed against a temporary carrier member having a low-adhesion surface, followed by laminating one or two adhesive layers to the foam.

U.S. Patent No. 3,565,247 (French FR—A—2 124 058) concerns a pressure-sensitive adhesive tape, the adhesive layer of which is a foam, thus affording the economy of creating a tape in a unitary process, as opposed to the need to form the pressure-sensitive layer or layers separately when making foam-backed tapes. To make a tape according to this patent, a blowing agent and a nucleating-reinforcing agent such as fumed silica are blended into a solution of a pressure-sensitive adhesive. After this blend is coated on a backing, it is heated to a temperature high enough to evaporate the solvent but not high enough to decompose the blowing agent. After the solvent has been evaporated, the temperature is increased to that necessary to decompose the blowing agent to release a gas which forms minute, generally spheroidal bubbles or microcells throughout the dried pressure-sensitive adhesive layer. Voids comprise 25 to 85% of the cellular adhesive layer. The patent reports that the cellular adhesive layer typically shows less than 5 percent recovery after being compressed to half its original thickness, the microcells collapsing under local high pressure.

The product of the present invention is similar to the adhesive layer on the tape of the U.S. Patent 3,565,247. The tape embodiment of the invention and the tape of U.S. Patent 3,565,247 each have a backing carrying a layer of pressure-sensitive adhesive foam, i.e., a cellular membrane comprising at least 15% voids. Unlike the adhesive layer on the tape of U.S. Patent 3,565,247, the cellular adhesive membrane of the product of the present invention, when compressed 2/3 of its voids thickness and released after 30 seconds, experiences a recovery above the line 10 on Fig. 1 of the drawing within 60 seconds after release. As indicated in Fig. 1, the compressed adhesive membrane tends to spring back to substantially its original thickness when it comprises up to about 45% voids, but to experience somewhat less recovery at lower densities.

By "voids thickness" is meant that portion of the thickness of the cellular adhesive membrane attributable to cellular voids. Useful products of the invention have been made with voids thicknesses ranging from about 18 to 65 percent of the membrane thickness. 15 to 85 percent should be a useful range. The less dense adhesive membranes can provide substantial adhesive thicknesses at very low cost. Greater adhesive thickness is often desirable because it tends to provide greater resistance to peel forces.

A pressure-sensitive adhesive layer of the invention on a tape demonstrated remarkably good adhesion on contact with rough surfaces.

Typical cellular pressure-sensitive adhesive membranes of the invention have remarkably good flexibility and conformability at sub-freezing temperatures.

According to the invention there is provided a pressure-sensitive adhesive product comprising a cellular pressure-sensitive adhesive membrane containing 15% to 85% voids, characterized in that:

(a) the cellular adhesive membrane comprises a polymer of at least one substituted or unsubstituted acrylate monomer,

(b) the polymer includes a photoinitiator, and

(c) said membrane, when compressed 2/3 of its void thickness and released after 30 seconds, experiences a recovery above line 10 on Figure 1 of the drawing within 60 seconds after release.

The adhesive product can be made by the steps of preparing a composition based on at least one substituted or unsubstituted acrylate monomer, said composition containing a photoinitiator and being polymerizable to a pressure-sensitive adhesive state, composition being coated onto a backing and frothed or first frothed and then coated and then polymerized *in situ* to the adhesive state the polymerization being simultaneous with the foaming and foaming is after coating; optionally the backing can be removed. Alternatively, the composition can be coated onto the backing without first being frothed, and the cellular adhesive membrane obtained by simultaneously foaming and polymerizing the coating. To date, better uniformity of cell structure has been attained by the frothing process. Either process differs from that of the aforementioned U.S. Patent 3,565,247, which discloses the process of first making a pressure-sensitive adhesive polymer and then foaming it. Solvent is evolved in this process, whereas the adhesive tape of the present invention can be made with virtually no evolution of volatile matter.

Frothing prior to polymerization is conveniently accomplished by whipping a gas into the polymerizable composition. After coating the frothed composition on a backing, polymerization may be initiated by ultraviolet radiation as taught in U.S. Patent No. 4,181,752. Because air tends to quench photopolymerization, it is preferred to use an inert frothing gas, such as nitrogen or carbon dioxide.

Since the viscosity of a mixture of polymerizable monomers tends to be too low to provide a coatable froth, the monomers may be partially polymerized prior to frothing to provide a composition having a viscosity in the range of about 1000 to 40,000 cps, conveniently by mixing a photoactive polymerization initiator with the monomers and exposing the mixture to ultraviolet radiation. Viscosities above 5000 cps tend to provide better cell uniformity, whereas viscosities below 15,000 cps are preferred for ease of handling. Instead of employing ultraviolet radiation, a heat-activatable polymerization initiator may be mixed with the monomers to provide a mixture which can be partially polymerized by heat to the desired viscosity prior to frothing. A third technique which has been successful is to mix the monomers with a thixotropic agent such as fumed silica, thereafter carrying out the entire polymerization in a single *in situ* step after coating.

If the monomer mixture has been photopolymerized to provide a froth of coatable viscosity, it may contain sufficient residual initiator to allow the coated froth to be fully polymerized under ultraviolet radiation. However, it is usually desirable to add further photoinitiator which may also crosslink the polymer.

*In situ* polymerization can also be effected by electron beam as suggested in U.S. Patent No. 4,234,500; see also U.S. Patent No. 2,956,904.

When the polymerization is to be effected by ultraviolet radiation, the polymerizable coating is preferably protected from air by a plastic foil overlay that is fairly transparent to ultraviolet radiation and has a low-adhesion surface. Biaxially oriented polyethylene terephthalate foil that is about 75% transparent to ultraviolet radiation is very useful. If the underlying backing also has a low-adhesion surface, both the backing and the transparent plastic foil can be stripped away so that the cellular adhesive membrane may be used for mounting objects. For such use, the cellular membrane may be reinforced by a tissue-like web to avoid becoming distorted if it is to be removed from both the backing and the transparent overlay before being applied. On the other hand, the polymerizable coating may be applied directly onto a molding, carpet, linoleum, metal foil, mechanical fastener, or any other object, and then polymerized.

If instead of covering the polymerizable coating, the polymerization is to be carried out in an inert atmosphere, the permissible oxygen content of the inert atmosphere can be increased by mixing into the polymerizable composition an oxidizable tin compound as taught in U.S. Patent No. 4,303,485, which also teaches that by doing so, thick coatings can be polymerized in air.

The photopolymerizable composition preferably contains a crosslinking agent to enhance the cohesive strength of the resulting cellular membrane. Useful crosslinking agents that also function as photopolymerization initiators are disclosed in U.S. Patents No. 4,330,590 and No. 4,329,384. Other suitable crosslinking agents including polyacrylic-functional monomers such as trimethylolpropane triacrylate and 1,2-ethylene glycol diacrylate.

Regardless of the process by which the cellular structure of the adhesive membrane is created, it is preferred to include in the composition a surfactant, preferably a silicone or a fluorochemical known to be useful for foaming organic liquids that have low surface tension. By doing so, tapes have been produced with cellular adhesive membranes of good uniformity wherein the cells have an average diameter within the range of 0.05 to 0.3 mm. Typically, 90% of the cells of the adhesive membrane vary in size no more than 2:1, but some of the adhesive membranes have been characterized by significant variations in cell size. Products of the invention have been produced with cells as small as 0.01 mm in diameter, and, when no surfactant was used, as great as 2 mm. Cellular adhesive membranes of the invention have been as thin as 0.1 mm and as thick as 6.25 mm. Even thicker membranes can be produced if desired.

It is not understood why some surfactants are more effective than others in producing a uniform cell structure, but those which have provided the best results are most effective when used in amounts ranging from 0.5 to 5% by weight of total solids. Either larger or smaller amounts might result in nonuniformity, the generation of appreciable numbers of cells larger than the preferred maximum of 0.3 mm, and reduced internal strength.

The cellular pressure-sensitive adhesive membrane of the invention preferably comprises a polymer of 50—100 parts of substituted or unsubstituted alkyl acrylate or methacrylate monomers (all of which are hereinafter collectively referred to as "acrylate monomer") and 0—50 parts of copolymerizable monoethylenically-substituted monomer. U.S. Patent No. Re. 24,906 discloses useful polymers, namely, copolymers of (1) 88—99 parts of alkyl acrylate having an average of 4—12 carbon atoms in their alkyl groups (2) correspondingly, 12—1 parts of at least one of acrylic acid, methacrylic acid, itaconic acid, acrylamide, and methacrylamide. Other useful polar monoethylenically-unsaturated monomers that are copolymerizable with acrylate monomer include N-substituted acrylamides, acrylonitrile, methacrylonitrile, hydroxyalkyl acrylates, cyanoethyl acrylate, maleic anhydride, and N-vinyl-2-pyrrolidone, all of which result in pressure-sensitive adhesives that are tacky at ordinary room temperature when used with $C_{4-12}$ alkyl acrylate in amounts up to about 12 mol percent of the acrylate monomer, or up to about 12 mol percent of the acrylate monomer, or up to about 50 mol percent when the copolymerizable monomer is mainly N-vinylpyrrolidone. Other copolymerizable monomers that should be useful include alkyl vinyl ethers, vinylidene chloride, styrene, and vinyltoluene.

Because the cellular pressure-sensitive adhesive membrane of the invention need not be tacky at room temperature if it becomes tacky upon heating, the alkyl acrylate may have an average of only 1—3 carbon atoms, and the acrylic acid and other copolymerizable monomers are useful at far larger proportions.

Compared to membranes which are tacky at ordinary room temperature, cellular pressure-sensitive adhesive membranes that become tacky when heated and are applied while tacky afford increased resistance to failures, both in shear and in peel, and hold better when exposed to elevated temperatures in use. They may also provide improved resistance to failures at ordinary room temperature.

A cellular pressure-sensitive adhesive membrane that is not tacky at ordinary room temperature may be laminated to a relatively thin noncellular pressure-sensitive adhesive layer to provide an adhesive tape product that adheres upon contact at room temperature and yet has the high internal strength afforded by its nontacky cellular membrane. One way to make such a laminate is to first coat onto a transparent backing a thin layer of unfrothed monomer or partially polymerized monomer mixture that is photopolymerizable to a pressure-sensitive adhesive state. This layer is then overcoated with a thicker photopolymerizable froth, which is then protected from air by a plastic film overlay, and the coatings are simultaneously subjected to ultraviolet radiation through the transparent backing. The noncellular adhesive layer of such a tape product may have a thickness of about 0.01 to 0.075 mm, but not more than 1/3 the thickness of the cellular membrane.

Even if the cellular adhesive membrane is tacky at ordinary room temperatures, a relatively thin noncellular pressure-sensitive adhesive surface layer may be employed if the objects to be joined require different adhesives. For example, no single adhesive may adhere well both to a certain automotive paint and to a certain plastic body side molding.

The cellular adhesive membrane of the invention may comprise a copolymer of an acrylate monomer and an acrylate-terminated oligomer such as acrylate-terminated polybutadiene. Such an adhesive membrane tends to be less tacky than are cellular adhesive membranes made from copolymers of U.S. patent Re 24,906. Tackiness can be enhanced by adding a tackifier resin prior to frothing.

Hollow glass microspheres having an average diameter of 10 to 200 micrometers can be blended into the polymerizable composition prior to coating, thus producing additional beneficial results as taught in U.S. Patent No. 4,223,067. The hollow spaces within the microsphere are not taken into account when calculating the voids of a cellular adhesive membrane of the present invention. A cellular adhesive membrane of the present invention comprising about 25% voids and 25% hollow glass microspheres by volume exhibited spongy physical characteristics very much like commercially available open-cell poly(ethylene/vinylacetate) foam. A cellular adhesive membrane of the present invention comprising 30—35% voids and no filler, but otherwise identical, was surprisingly less spongy.

Other useful filler materials include fibrous reinforcing strands, woven and nonwoven reinforcing fabrics, glass beads, plastic hollow microspheres and beads, viscosity-adjusting agents and pigments, all of which tend to enhance the internal strength of the cellular adhesive membrane. If the polymerization is to be effected by ultraviolet radiation, care should be exercised to select materials which allow the radiation to penetrate into the entire coating during the photopolymerization step.

*Brief Description of the Drawing*

In the drawing:

Fig. 1 shows the relationship of percent voids and percent recovery (%R) of cellular adhesive membranes of the invention after being compressed 2/3 of the voids thickness;

Fig. 2 schematically illustrates apparatus for making a pressure-sensitive tape product of the invention; and

Fig. 3 is a schematic edge view of the tape produced on the apparatus of Fig. 2.

The recovery test data shown by tiny circles in Fig. 1 were obtained by testing tapes of the invention including those of Examples 1—21 and 23—27 as reported below. In each case, the cellular adhesive membrane was compressed about 2/3 of its voids thickness and released after 30 seconds, and the percent recovery (%R) was determined 60 seconds after release. All of the circles lie above the curve 10.

In Fig. 2, flexible plastic foil 14, which has low-adhesion surface, is continuously fed into roll coater 16 where it is joined by tissue-like reinforcing web 18. Polymerizable froth 20 fed from tube 22 into the nip of first roll coater 16 substantially saturates web 18 as it passes through roll coater 16. At second roll coater 24, additional polymerizable froth 20 is added at the nip from second tube 26, together with transparent flexible plastic foil 28 which has a low-adhesion surface. As the whole emerges from second roll coater 24, froth 20, while protected from air by foils 14 and 28, froth 20, while protected from air by foils 14 and 28, is exposed to ultraviolet radiation from a bank of lamps 30 to polymerize froth 20 to a pressure-sensitive adhesive state. The resultant tape product is wound upon itself about a core to provide roll 32. However, it is preferred to peel off plastic foils 14 or 28 before windup in order to avoid wrinkling, the remaining foil serving as the backing.

Fig. 3 shows the roll 32 being unwound and foils 14 and 28 being stripped away to present reinforced cellular pressure-sensitive adhesive tape membrane 34 for application to a desired use.

*Typical Tape-making Procedure*

Into the mixture of photopolymerizable monomers was stirred 0.04% by weight of 2,2-dimethoxy-2-phenyl acetophenone (obtainable as "Irgacure" 651). This was partially polymerized to provide a syrup about 3000 cps in viscosity by exposure to ultraviolet radiation. To the syrup was added 0.10% by weight of additional "Irgacure" 651 plus surfactant and crosslinking agent. The mixture was slowly stirred, taking

care not to cause any frothing, and then transferred to a 90-mm frother operating at 900 rpm. While nitrogen gas was fed into the frother, the frothed syrup was delivered through 12.5-mm tubing to the nip of a roll coater between a pair of transparent, biaxially oriented polyethylene terephthalate foils, the facing surfaces of which had been provided with low-adhesion coatings. The tubing was partially constricted by a clamp to provide a desired pressure in the frother.

The composite emerging from the roll coater was irradiated with a bank of fluorescent black light bulbs (Sylvania F20T12BL), 90% of the emissions of which were between 300 and 400 nm with a maximum at 351 nm. The exposure was 900 mj as measured by an International Light "Light Bug", which is spectrally responsive between 250 and 430 nm. The composite was cooled by blowing air against both foils during the irradiation to keep their temperature below 85°C to avoid wrinkling.

The uniformity, density, cell size, and tensile strength and elongation of the cellular adhesive membrane of the resultant tape were all affected by the selection and amount of surfactant, the nitrogen flow rate, and the pressure in the frother.

*Shear Value*

A cellular adhesive membrane is self-adhered to a rigid stainless steel plate and a rigid stainless steel panel with exactly 1.27 $cm^2$ of the membrane in contact with the panel. Before testing, a 1000-g weight rests over the bonded area for 15 minutes. While the panel is tilted 2° from the vertical to insure against any peel forces, a 500-gram weight is immediately hung from the plate for testing at 20°C. When tested at 70°C, the panel with the adhered tape is placed in the oven for 15 minutes before hanging the weight. The time at which the weight falls is the Shear Value. If no failure occurs, the test is usually discontinued at 10,000 minutes.

*180° Peel*

2.54-cm wide tape, comprising a 50-micrometer biaxially oriented polyethylene terephthalate foil backing and a cellular adhesive membrane, is self-adhered to a smooth stainless steel plate under the weight of a 2.04-kg hard rubber roller, 2 passes in each direction. After 15 minutes dwell, 180° Peel is measured by moving the free end of the tape away from the steel plate at a rate of about 0.5 cm per second.

In the following examples, all parts and percentages are given by weight except as noted, and all of the tape products were aggressively tacky at ordinary room temperature unless otherwise noted. Surfactants used were:

A = silicone resin dissolved in xylenes (Dow Corning DC—1250), 50% solids.
B = $C_8F_{17}SO_2N(C_2H_5)(C_2H_4O)_7CH_3$
C = solution of fluoroaliphatic oligomer of Example 2 of U.S. Patent No. 3,787,351 in ethyl acetate, 50% solids.
D = solition of fluoroaliphatic oligomer of Example 3 of U.S. Patent No. 3,787,351 in an aromatic solvent, 50% solids.
E = solution of 90 parts of a fluoroaliphatic copolymer (prepared as described in U.S. Patent No. 3,787,351) of

| | Parts |
|---|---|
| $C_8F_{17}SO_2N(CH_3)C_4H_8OCOC(CH_3) = CH_2$ | 35 |
| $C_8F_{17}SO_2N(CH_3)C_2H_4OCOCH = CH_2$ | 35 |
| $CH_2 = C(CH_3)COO(C_4H_8O)_{28}COC(CH_3) = CH_2$ | 20 |
| $C_4H_9OCOCH = CH_2$ | 10 |

and 10 parts of a urethane-carbodiimide adduct (prepared as in Example 2 of U.S. Patent No. 4,215,205) of 2 moles of $C_8F_{17}SO_2N(C_2H_5)C_2H_4OH$ and 3 moles $CH_3C_6H_3(NCO)_2$, 40% solids in a chlorinated organic solvent mixture.
F = fluoroaliphatic urethane adduct of 2 moles $C_8F_{17}SO_2N(C_2H_4OH)_2$, 3 moles $CH_3C_6H_3(NCO)_2$, and 1.5 moles poly(oxyalkylene)glycol ("Pluronic" L—44), prepared by the procedure of Example 1 of U.S. Patent No. 4,289,892.
G = solution-suspension of a copolymeric fluoroaliphatic oligomer [of 70 parts N-methyl-perfluorooctanesulfonamidoethyl acrylate, 20 parts poly(oxytetramethylene)acrylate, and 10 parts butyl acrylate] in poly(oxypropylene)triol of 1500 average molecular weight, 20% solids.
H = silicone resin (Union Carbide Y—6827).
I = copolymer of polydimethylsiloxane and poly(alkylene oxide) (Dow Corning DC—190).

Monomers employed were as follows:

IOA = isooctyl acrylate
AA = acrylic acid
BA = butyl acrylate
NVP = N-vinyl-2-pyrrolidone
HDDA = 1,6-hexanediol diacrylate

MPT = 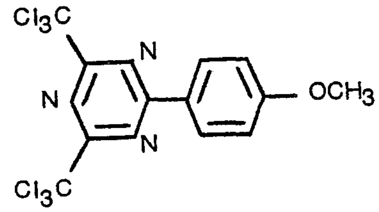

In all the examples that follow, all parts and percentages are by weight unless otherwise noted.

The recovery test data reported in Table II was obtained by attempting to compress the cellular adhesive membrane 2/3 of its voids thickness. The actual percent compresion is reported as "%C" and the percent recovery as "%R", obtained as follows:

$T_o$ = original thickness of adhesive membrane
$T_c$ = compressed thickness
$T_r$ = thickness 60 seconds after release following compression at $T_c$ for 30 seconds
V = voids in adhesive membrane obtained from

$$\frac{d_u - d_f}{d_u}$$

where $d_u$ is the unfoamed density and $d_f$ is the foamed density.

$$\%C = \frac{T_o - T_c}{VT_o} \times 100$$

$$\%R = \frac{T_r - T_c}{T_o - T_c} \times 100$$

Examples 1—21

A series of 21 tape products of the invention were made by the above-described Typical Tape-making Process under specific conditions as reported in Table I and tested as reported in Table II.

TABLE I

| Exmp No | Monomers Ratio | C-linker % | Surfactant % solids | Pump cc/min | $N_2$ cc/min | Pressure kPa |
|---|---|---|---|---|---|---|
| 1 | IOA/AA 90/10 | HDDA 0.15 | C 0.75<br>B 1.0 | 79 | 12.9 | 290 |
| 2 | ditto | ditto | D 2.0 | 92.4 | 12.9 | 172 |
| 3 | ditto | ditto | D 2.0 | 72.6 | 12.9 | 241 |
| 4 | ditto | ditto | D 2.0 | 72.6 | 24.5 | 241 |
| 5 | ditto | ditto | D 2.0 | 72.6 | 38.8 | 345 |
| 6 | ditto | ditto | D 3.0 | 85.8 | 72 | 276 |
| 7 | ditto | ditto | D 3.0 | 85.8 | 116 | 276 |
| 8 | ditto | ditto | F 1.9 | 72.6 | 46.5 | 345 |
| 9 | ditto | ditto | A 0.6 | 79 | 12.9 | 241 |
| 10 | ditto | ditto | E 1.6 | 66 | 12.9 | 276 |
| 11 | ditto | ditto | C 0.75<br>B 1.0 | 66 | 12.9 | 138 |
| 12* | ditto | none | C 0.75<br>B 1.0 | 231 | 38.8 | 345 |
| 13* | ditto | none | C 0.75<br>B 1.0 | 66 | 15.5 | 345 |
| 14 | IOA/NVP 70/30 | HDDA 0.15 | D 2.0 | 132 | 15.5 | 241 |
| 15 | IOA/AA/BA 70/15/15 | ditto | D 2.0 | 85.5 | 25.8 | 241 |
| 16 | IOA/AA/BA 55/25/20 | ditto | C 0.75<br>B 1.0 | 72.6 | 11.6 | 276 |
| 17 | IOA | ditto | C 0.75<br>B 1.0 | 85.5 | 22 | 207 |
| 18 | IOA/AA 70/30 | ditto | D 2.0 | 79 | 15.5 | 276 |
| 19 | ditto | ditto | D 2.0 | 70 | 33.6 | 276 |
| 20 | IOA/AA 90/10 | none | none | 85.8 | 26 | 341 |
| 21 | ditto | MPT 0.05 | C 0.75<br>B 1.0 | 99 | 18 | 310 |

* Examples 12 and 13 received exposure of 1200 mj because of their greater thickness; the monomer mixture of Example 12 included 1.4% of a 20% solution of $SnCl_2 \cdot 2H_2O$ in polypropylene glycol of 425 average molecular weight.

TABLE II

| Exmp No | $T_o$ mm | Typical Cell Size mm | %V | Recovery Test %C | %R | 180° Peel N/dm | Shear Value (min.) at 20°C | 70°C |
|---|---|---|---|---|---|---|---|---|
| 1 | 1.0 | 0.1 —0.2 | 34 | 70 | 90 | 92.4 | 5860A | 487 |
| 2 | 1.25 | 0.05—0.2 | 22 | 64 | 93 | | | |
| 3 | 1.2 | 0.08—0.2 | 36 | 70 | 92 | 87.5 | | 10000+ |
| 4 | 1.05 | 0.05—0.2 | 42 | 62 | 55 | | | |
| 5 | 0.9 | 0.1 —0.3 | 52 | 61 | 36 | | | 15 |
| 6 | 1.1 | 0.1 —0.3 | 58 | 63 | 47 | | | |
| 7 | 1.05 | 0.1 —0.5 | 66 | 66 | 56 | 52.5 | 10000+ | 155 |
| 8 | 1.05 | 0.02—0.1 | 61 | 66 | 47 | | | 10000+ |
| 9 | 1.1 | 0.05—0.2 | 31 | 64 | 94 | | | |
| 10 | 1.1 | 0.05—0.1 | 42 | 66 | 84 | 63.4 | 10000+ | 925 |
| 11 | 0.15 | 0.05—0.1 | 39 | 51 | 80 | | | 10000+ |
| 12 | 5.9 | 0.05—0.4 | 38 | 63 | 98 | | | |
| 13 | 3.6 | 0.05—0.5 | 38 | 66 | 89 | | | |
| 14 | 1.2 | 0.05—0.2 | 38 | 64 | 91 | 73.8 | 10000+ | 48 |
| 15 | 1.4 | 0.1 —0.3 | 33 | 66 | 83 | 152 | | 10000+ |
| 16 | 1.3 | 0.05—0.2 | 42 | 65 | 71 | 61.3* | 10000+ | 10000+ |
| 17 | 1.25 | 0.1 —0.4 | 30 | 67 | 95 | 96.3 | | 1A |
| 18 | 1.2 | 0.05—0.2 | 38 | 64 | 84 | * | | * |
| 19 | 1.2 | 0.05—0.3 | 59 | 66 | 72 | * | | * |
| 20 | 1.0 | 0.2 —1.6 | 30 | 67 | 95 | 145.5 | | 55 |
| 21 | 1.1 | 0.05—0.2 | 38 | 65 | 73 | 30.6 | | 315A |

* Because not tacky at room temperature, weights totaling 3000 g (110 g/cm$^2$) were placed over the contact area for 15 minutes at room temperature before testing the tape of Example 16. The tapes of Examples 18 and 19 did not adhere under those weights at room temperature; when the same weights were applied in a 70°C oven for 15 minutes, the 180° Peel of the tapes of Examples 16, 18 and 19 were 147.5, 68.4 and 45.9 N/dm, respectively. Shear Values for the tapes of Examples 18 and 19, tested after applying 310 g/cm$^2$ for 15 min. at 70°C, were 10,000+ minutes.

"A" following a Shear Value indicates adhesive failure. All other failures were cohesive.

Some of the cellular adhesive membranes were tested for tensile strength (ASTM D—412—80 using standard dumbbell Die C), with the following results:

TABLE III

| Example No. | Tensile (kPa) | Elongation % |
|---|---|---|
| 1 | 283 | 850 |
| 3 | 427 | 825 |
| 4 | 248 | 775 |
| 5 | 165 | 700 |
| 7 | 103 | 575 |
| 10 | 469 | 750 |
| 14 | 400 | 650 |
| 15 | 345 | 600 |
| 16 | 1406 | 325 |
| 17 | 365 | 725 |
| 18 | 3696 | 150 |
| 19 | 1378 | 10 |
| 20 | 214 | 725 |
| 21 | 234 | 1000 |

Example 22

Pieces of the polyester-backed cellular adhesive membrane of Example 1, at least 2.5 cm square, were compressed under a one-cm diameter presser foot to the indicated %C for 30 seconds. The %R was determined one minute after release, with the following results:

| %C | %R |
|---|---|
| 116 | 75 |
| 160 | 73 |
| 225 | 68 |

These values indicate the remarkable ability of the cellular adhesive membrane of a typical tape product of the invention to recover from severe compression for a short period of time. In each case, further recovery was experienced during the next few hours.

When an adhesive membrane of the present invention is observed under a microscope while under compression, the individual cells become smaller and eventually disappear under increasing very high pressures. Upon release of the pressure, cells immediately reappear having the same size as originally, but in much smaller numbers. After standing overnight, there are more cells having a larger average size than originally. From such observations it is deduced that the gas in the cells dissolves in the adhesive polymer under compression.

Example 23

A tape was made as in Example 1 except that the isooctyl acrylate/acrylic acid monomer weight ratio was 81/19, the monomers were partially polymerized to a coatable syrup by thermal, rather than ultraviolet, means, and no crosslinker was added to the syrup. The cellular pressure-sensitive adhesive membrane of

the resultant tape product comprised 44% voids, had a thickness of 0.68 mm, and experienced 88% recovery (%R) from a compression of 68% (%C). The cellular membrane was sufficiently tacky to form adequate adhesive bonds at ordinary room temperature, although somewhat stronger initial bonding strength could be attained by heating the membrane before application.

Example 24

A tape was made similarly to that of Example 1 except that the cellular adhesive membrane incorporated a tissue-like reinforcing scrim of intermingled polyester fibers [duPont Paper Synthetic Spunbond Polyester 0.6 oz, 2006 Reemay, 3 mils (76 micrometers) thick]. The apparatus used was similar to that shown in Fig. 2 except that there was no bank of froth at the second roll coater 24, and the plastic foil 28 was peeled off and discarded before the composite was wound up. The initial thickness of the scrim was about 0.075 mm, and the thickness of the cellular pressure-sensitive adhesive membrane including the scrim was 1.1 mm. The cellular membrane comprised 36% voids, had 90%R from 66%C, 180° Peel of 89.7 N/dm and a Shear Value at 70°C of more than 10,000 minutes.

Example 24A

The cellular membrane of a tape made as described in Example 24 comprised 25% voids, had a thickness of 1.2 mm, 88% R from 73% C, 180° Peel of 52.5N/dm, and a Shear Value at 70°C of more than 10,000 minutes. The tape was tested for adhesion as in the "180 Peel" test described above except at 90° peel after one hour dwell and using cold-rolled steel plates, one smooth and one knurled. The ratio of the peel values from the knurled plate to the smooth plate was 0.97.

Comparative Example 24B

A pressure-sensitive adhesive tape was made by photopolymerization to have a noncellular layer of the same chemical composition as that of the cellular membrane of Example 24A. Four of these noncellular layers were laminated to each other to provide a total thickness of 1.0 mm, approximating that of the cellular membrane of Example 24A. When tested for 90° peel as in Example 24A, the ratio of the peel values from the knurled plate to the smooth plate was 0.39.

Example 25

A tape was made as in Example 1 except that added to the partially polymerized syrup were glass microbubbles 20—150 micrometers in diameter (average 55 micrometers) having a bulk density of 0.07 g/cc (true value 0.11). The resultant cellular pressure-sensitive adhesive membrane had a thickness of 1.0 mm and comprised 25% voids. The glass microbubbles constituted 7% by weight of the membrane, which had 86%R from 70%C. 180° Peel was 74.4 N/dm and Shear Value at 70°C was over 10,000 minutes. The tape of this example showed greater compressibility under a given pressure than did tapes of the preceding examples. A piece of tape 2.54 cm square, subjected to 34 kPa/cm$^2$ on an oversize platen, was compressed to 87.5% of its original thickness, whereas the tape of Example 24 was compressed to 91.5% of its original thickness.

Example 26

A tape was made as in Example 25 except that the monomers used were 70 parts of isooctyl acrylate and 30 parts of N-vinyl-2-pyrrolidone. The resultant cellular pressure-sensitive adhesive membrane had a thickness of 1.0 mm and comprised 25% voids. The glass microbubbles occupied 25% by volume (7% by weight) of the membrane, which had 85%R from 65%C. 180° Peel was 61.3 N/dm, and Shear Value at 70°C was over 10,000 minutes.

Example 27

Into 20 parts of cyclohexylacrylate and 20 parts of butyl acrylate was dissolved 40 parts of pentaerythritol ester of highly stabilized rosin (Hercules "Floral" 85). One part of a plasticizing oil ("Shellflex" 371N), 0.5 part of "Irgacure" 651, and 15 parts of vinyl-terminated copolymer of butadiene and acrylonitrile ("Hycar" VTBN 1300X23) were mixed in, followed by the addition of 2 parts (1 part solids) of Surfactant C, 0.5 part of Surfactant B, and 2 parts of a 20% solution of $SnCl_2 \cdot 2H_2O$ in polypropylene glycol of 425 average molecular weight. The resulting syrup, of coatable viscosity, was frothed in air manually, coated between a pair of plastic foils, and irradiated with ultraviolet radiation. The resultant pressure-sensitive adhesive membrane was quite tacky, comprised 30% voids, and experienced a recovery (%R) of 98% from a compression (%C) of 65%.

Example 28

An oligomer, made by reacting isophorone diisocyanate and a polyester made from adipic acid, neopentyl glycol and 1,6-hexanediol ("Lexorez" 1400—12) was endcapped by reaction with methacrylic acid. 40 g of this methacrylate-endcapped urethane-polyester oligomer was mixed with 40 g isooctyl acrylate, 1.5 g (0.75 g solids) Surfactant C, 0.5 g Surfactant B, 0.08 g "Irgacure" 651 photoinitiator, and 0.4 g stannous octoate. The mixture was frothed in air by vigorous stirring with a tongue depressor, coated between plastic foils, and irradiated with ultraviolet radiation to provide a moderately-tacky pressure-sensitive adhesive tape having a cellular adhesive membrane.

Example 29

A tape was made as in Example 1, except that 0.05% benzoyl peroxide was added to the coatable froth instead of the HDDA crosslinker, and the coated syrup was thermally cured in an oven at 83°C instead of being irradiated. The resultant tape product had a cellular pressure-sensitive adhesive membrane, which had a thickness of 1.1 mm, comprised 36% voids, and had 80%R from 62%C.

Example 30

A tape was made as in Example 1, except that the monomer composition was not partially polymerized prior to frothing. Instead, 3% by weight of a thixotropic agent (fumed silica) was included in the monomer composition, so that its viscosity was increased to a coatable condition prior to frothing. Also, the amount of Surfactant B was only 0.7%. The resultant cellular pressure-sensitive adhesive membrane was 1.15 mm thick, comprised 38% voids, and had 82%R from 64%C.

Example 31

To 100 parts of a syrup of partially polymerized 90/10 isooctyl acrylate/acrylic acid were added 0.10 part "Irgacure" 651, 0.5 part stannous octoate, 0.5 part fumed silica, 1 part (0.2 part solids) of Surfactant G, 2 parts Surfactant H, and 4 parts $CFCl_3$ ("Freon" 11). The resultant blend was coated between plastic foils and polymerized by exposure to ultraviolet irradiation (GE F15T8/BLB lamps). The cellular pressure-sensitive adhesive product was 0.63 mm thick, comprised 34% voids, and had 83%R from 73%C.

Example 32

98 parts of isooctyl acrylate and 2 parts of acrylic acid were partially copolymerized thermally to a syrup of coatable viscosity. To the syrup was added 0.1% "Irgacure" 651, 3.4% fumed silica and 0.67% azobisisobutylnitrile as a blowing agent. This blend was coated between plastic foils and exposed to ultraviolet radiation as in Example 1. The exotherm of the polymerization raised the temperature of the coating to about 105°C, thus decomposing the blowing agent to provide a cellular pressure-sensitive adhesive layer having a thickness of 2.15 mm, 34% voids, and 93%R from 68%C.

Example 33

A syrup of coatable viscosity was made under nitrogen by ultraviolet irradiation of a solution of 100 parts of 2-ethylhexyl methacrylate, 0.25 part "Irgacure" 651 and 5 parts of a 20% solution of $SnCl_2 \cdot 2H_2O$ in polypropylene glycol of 425 average molecular weight. To the syrup was added an additional 2.5 parts of the $SnCl_2$ solution and 5 parts (2.5 parts solids) of Surfactant D. This blend was frothed in air manually, coated between plastic foils and exposed to ultraviolet radiation to provide a cellular pressure-sensitive adhesive membrane having a thickness of 2 mm, 16% voids, and 86%R from 64%C.

Example 34

A syrup was made as in Example 33 except that the methacrylate was replaced by a 67/12/21 isooctyl acrylate/acrylic acid/butyl methacrylate mixture. To the syrup was added 2 parts (1 part solids) of Surfactant C and 0.5 part Surfactant B. This blend was frothed in air manually, coated between plastic foils, and irradiated to provide a cellular pressure-sensitive adhesive membrane having a thickness of 1.08 mm, 19% voids, and 90%R from 62%C. Although slightly less tacky than that of Example 33, the adhesive membrane was aggressively tacky and exhibited extraordinarily good toughness.

Example 35

Into 100 parts of partially polymerized 90/10 isooctyl acrylate/acrylic acid of coatable viscosity was rapidly mixed 3.6 parts sodium borohydride. The mixing was accompanied by rapid evolution of a gas, causing the syrup to foam. The foamed syrup was coated between two plastic foils and photopolymerized. The resulting cellular adhesive membrane had a thickness of 1.65 mm, 47% voids, and 81%R from 68%C.

Example 36

Twenty-five parts of "Foral" 85 tackifying resin was dissolved in 25 parts of epoxy cyclohexyl methyl epoxy cyclohexane carboxylate (Union Carbide ERL—4221) and 8.3 parts of polyethylene glycol of 600 average molecular weight. To this solution was added 2 parts (1 part solids) of Surfactant C, 0.5 part of Surfactant B, 2 parts of "Shellflex" 371N plasticizing oil, and 2 parts of triphenylsulfonium hexafluorophosphate. The mixture was frothed in air, coated between plastic foils and irradiated with ultraviolet light to produce a slightly tacky pressure-sensitive adhesive tape having a cellular membrane comprising 49% voids, and exhibiting 71%R from 65%C.

Example 37

After peeling off one of its transparent foils to expose the cellular membrane of Example 18, a noncellular pressure-sensitive adhesive transfer tape was laminated to the cellular membrane using a hard rubber roller. The transfer tape adhesive was a 0.05-mm layer of 90/10 isooctyl acrylate/acrylic acid

copolymer that had been polymerized by ultraviolet radiation with a crosslinking agent as disclosed in U.S. Patent No. 4,330,590. Another piece of the same transfer tape was then laminated in the same way to the other face of the cellular membrane. This 3-layer tape product was provided with a filament-reinforced backing and tested for 180° Peel. The 180° Peel was 186 N/dm.

*Roll Stability*

The cellular pressure-sensitive adhesive membrane of Example 1 was transferred to the face of a polyethylene foil that had an adhesion-promoting primer coating. After being slit to widths of 2.54 cm, 45.7 meter lengths were wound onto 7.6-cm diameter cores to form rolls. Two of these rolls were stored at ordinary room temperature for 6 months, one lying flat against a hard surface and the other supported through its core by a horizontal rod.

The roll which was stored flat was dimensionally unchanged, but the radial thickness measured upwardly on the roll stored on the horizontal rod was 8% less than prior to storage, while its radial thickness measured downwardly was unchanged. Strips of the adhesive membrane taken from each roll after storage were unchanged in appearance and exhibited the same properties as are reported in Table I for the freshly-prepared membrane.

As used in the foregoing specification, the following terms are understood to be trademarks: "Foral", "Freon", "Hi-White", "Hycar", "Irgacure", "Lexorez", "Light Bug", and "Shellflex".

**Claims**

1. Pressure-sensitive adhesive product comprising a cellular pressure-sensitive adhesive membrane containing 15% to 85% voids, characterized in that:

(a) The cellular adhesive membrane comprises a polymer of at least one substituted or unsubstituted acrylate monomer,

(b) the polymer includes a photoinitiator, and

(c) said membrane, when compressed 2/3 of its void thickness and released after 30 seconds, experiences a recovery above line 10 on Figure 1 of the drawing within 60 seconds after release.

2. Pressure-sensitive adhesive product as defined in claim 1 further characterized in that said pressure-sensitive adhesive comprises a product of 50—100 parts of substituted or unsubstituted acrylate monomer and 0—50 parts of copolymerizable monoethylenically substituted monomer.

3. Pressure-sensitive adhesive product as defined in claim 2 further characterized in that said pressure-sensitive adhesive is a copolymer of

(1) 88—99 parts of alkyl acrylate having an average of 4—12 carbon atoms in the alkyl groups and

(2) correspondingly, 12—1 parts of at least one of acrylic acid, methacrylic acid, itaconic acid, acrylamide and methacrylamide.

4. Pressure-sensitive adhesive product as defined by any one of claims 1 to 3 are further characterized in that the pressure-sensitive adhesive membrane is tacky at ordinary room temperature.

5. Pressure-sensitive adhesive product as defined by any one of claims 1 to 3 further characterized in that the pressure-sensitive adhesive membrane is non-tacky at room temperature but becomes tacky when heated.

6. Pressure-sensitive adhesive product as defined in any preceding claim further characterized in that the average diameter of the cells of the cellular membrane does not exceed 0.3 mm.

7. Pressure-sensitive adhesive product as defined by any one of claims 1 to 6 are further characterized in that the backing is flexible and has a low-adhesion surface from which the cellular membrane is readily removable.

8. A laminate of a pressure-sensitive adhesive product as defined in any one of claims 1 to 6 and a noncellular adhesive layer of not more than 1/3 the thickness of the cellular membrane.

9. A method of making a pressure-sensitive adhesive product according to claim 1 comprising the steps of

(1) preparing a composition based on at least one substituted or unsubstituted acrylate monomer, said composition containing a photoinitiator and being polymerizable to a pressure-sensitive adhesive state,

(2) frothing the composition,

(3) coating the froth onto a backing, and

(4) polymerizing the coated froth *in situ* to a pressure-sensitive adhesive state, and

(5) optionally removing the backing.

10. The method of claim 9, further characterized in that step (4) involves exposure to ultraviolet radiation.

11. A method of making a pressure-sensitive adhesive product of claim 1 comprising the steps of

(1) preparing a composition based on at least one substituted or unsubstituted acrylate monomer, said composition containing a photoinitiator and being polymerizable to a pressure-sensitive adhesive state,

(2) coating the composition onto a backing, and

(3) simultaneously foaming and polymerizing the coating *in situ* to a pressure-sensitive adhesive state to provide a pressure-sensitive adhesive membrane, and

(4) optionally removing the backing.

12. The method of claim 9 or 11 further characterized in that a surfactant is included in the composition in an amount within the range from 0.5 to 5% by weight total solids.

**Patentansprüche**

1. Haftkleberprodukt mit einer zelligen Haftklebermembran mit einem Porenvolumen von 15 bis 85%, dadurch gekennzeichnet, daß

(a) die zellige Klebermembran mindestens teilweise aus einem Polymer aus mindestens einem substituierten oder nichtsubstituierten Acrylatmonomer besteht,

(b) das Polymer einem Photoinitiator enthält und

(c) die Membran nach einem Zusammendrücken um 2/3 ihrer Porendicke und Friegabe nach 30 Sekunden innerhalb von 60 Sekunden nach der Freigabe eine Erholung über die Uinie 10 in Figur 1 hinaus erfährt.

2. Haftkleberprodukt nach Anspruch 1, dadurch gekennzeichnet, daß der Haftkleber mindestens teilweise aus einem Produkt besteht, das 50 bis 100 Teile substituiertes oder nichtsubstituiertes Acrylatmonomer und 0 bis 50 Teile copolymerisierbares, monoethylenisch substituiertes Monomer enthält.

3. Haftkleberprodukt nach Anspruch 2, dadurch gekennzeichnet, daß der Haftkleber ein Copolymer aus

(1) 88 bis 99 Teilen Alkylacrylat mit durchschnittlich 4 bis 12 Kohlenstoffatomen in den Alkylgruppen und

(2) dementsprechend 12 bis 1 Teile aus mindestens einer Verbindung der Gruppe Acrylsäure, Methacrylsäure, Itaconsäure, Acrylamid und Methacrylamid enthält.

4. Haftkleberprodukt nach einem der Ansprüche 1 bis 3, dadurch gekennzeichnet, daß die Haftklebermembran bei gewöhnlicher Zimmertemperatur klebfähig ist.

5. Haftkleberprodukt nach einem der Ansprüche 1 bis 3, dadurch gekennzeichnet, daß die Haftklebermembran bei Zimmertemperatur nichtklebfähig ist und bei Erwärmung klebfähig wird.

6. Haftkleberprodukt nach einem der vorhergehenden Ansprüche, dadurch gekennzeichnet, daß der durchschnittliche Durchmesser der Zellen der zelligen Membran höchstens 0,3 mm beträgt.

7. Haftkleberprodukt nach einem der Ansprüche 1 bis 6, dadurch gekennzeichnet, daß die Tragschicht flexibel ist und eine schwachklebende Oberfläche besitzt, von der die zellige Membran leicht abnehmbar ist.

8. Schichtstoff aus einem Haftkleberprodukt nach einem der Ansprüche 1 bis 6 und einer nichtzelligen Klebstoffschicht in einer Dicke von nicht mehr als 1/3 der Dicke der zelligen Membran.

9. Verfahren zum Herstellen eines Haftkleberproduktes nach Anspruch 1 mit folgenden Schritten:

(1) Auf der Grundlage mindestens eines substituierten oder nichtsubstituierten Acrylatmonomers wird eine Zusammensetzung hergestellt, die einem Photoinitiator enthält und in einen Haftkleberzustand polymerisierbar ist;

(2) die Zusammensetzung wird geschäumt;

(3) der Schaum wird auf eine Tragschicht aufgetragen;

(4) der aufgetragene Schaum wird durch Polymerisieren in situ in einen Haftkleberzustand überführt; und

(5) die Tragschicht wird gegebenenfalls entfernt.

10. Verfahren nach Anspruch 9, dadurch gekennzeichnet, daß im Schritt (4) eine Ultraviolettbestrahlung erfolgt.

11. Verfahren zum Herstellen eines Haftkleberproduktes nach Anspruch 1 mit folgenden Schritten:

(1) Auf der Grundlage mindestens eine substituierten oder nichtsubstituierten Acrylatmonomers wird eine Zusammensetzung hergestellt, die einen Photoinitiator enthält und in einen Haftkleberzustand polymerisierbar ist;

(2) die Zusammensetzung wird auf eine Tragschicht aufgetragen;

(3) der Überzug wird gleichzeitig geschäumt und durch eine Polymerisation in situ in einen Haftkleberzustand überführt, so daß eine Haftklebermembran erhalten wird; und

(4) die Tragschicht wird gegebenenfalls entfernt.

12. Verfahren nach Anspruch 9 oder 11, dadurch gekennzeichnet, daß in der Zusammensetzung ein Tensid in einer Menge im Bereich von 0,5 bis 5 Gew.% des Gesamtteststoffgehalts verwendet wird.

**Revendications**

1. Produit adhésif autocollant comprenant une membrane adhésive autocollante cellulaire contenant 15% à 85% d'interstices, caractérisé en ce que:

(a) la membrane adhésive cellulaire comprend un polymère d'au moins un acrylate monomère substitué ou non substitué,

(b) le polymère comprend un photo-amorceur, et

(c) ladite membrane, lorsqu'elle est comprimée aux 2/3 de son épaisseur interstitielle et relâchée après 30 secondes, présente un rétablissement supérieur à la courbe 10 de la figure 1 du dessin dans les 60 secondes qui suivent le relâchement.

2. Produit adhésif autocollant comme défini dans la revendication 1, caractérisé de plus en ce que ledit adhésif autocollant comprend un produit de 50 à 100 parties d'un acrylate monomère substitué ou non substitué et de 0 à 50 parties d'un monomère copolymérisable à insaturation monoéthylénique.

3. Produit adhésif autocollant comme défini dans la revendication 2, caractérisé de plus en ce que ledit adhésif autocollant est un copolymère de:

(1) 88 à 99 parties d'un acrylate d'alkyle ayant en moyenne 4 à 12 atomes de carbone dans le groupe alkyle, et

(2) de façon correspondante 12 à 1 parties d'au moins un élément de l'ensemble acide acrylique, acide méthacrylique, acide itaconique, acrylamide et méthacrylamide.

4. Produit adhésif autocollant comme défini dans l'une quelconque des revendications 1 à 3, caractérisé de plus en que la couche adhésive autocollante est poisseuse à la température ordinaire.

5. Produit adhésif autocollant comme défini par l'une quelconque des revendications 1 à 3, caractérisé de plus en ce que la couche adhésive autocollante est non poisseuse à la température ordinaire mais devient poisseuse lorsqu'elle est chauffée.

6. Produit adhésif autocollant comme défini dans l'une quelconque des revendications précédentes, caractérisé de plus en ce que le diamètre moyen des cellules de la membrane cellulaire ne dépasse pas 0,3 mm.

7. Produit adhésif autocollant comme défini par l'une quelconque des revendications 1 à 6, caractérisé de plus en ce que le support est souple et a une surface de faible adhérence dont la membrane cellulaire est facile à séparer.

8. Stratifié d'un produit adhésif autocollant comme défini dans l'une quelconque des revendications 1 à 6 et d'une couche adhésive non cellulaire dont l'épaisseur n'est pas supérieure au 1/3 de celle de la membrane cellulaire.

9. Procédé de préparation d'un adhésif autocollant selon la revendication 1 comprenant les stades de:

(1) préparation d'une composition à base d'au moins un acrylate monomère substitué ou non substitué, ladite composition contenant un photo-amorceur et étant polymérisable en un adhésif autocollant,

(2) battage de la composition,

(3) revêtement d'un support avec l'écume, et

(4) polymérisation du revêtement d'écume in situ en un adhésif autocollant, et

(5) éventuellement enlèvement du support.

10. Procédé suivant la revendication 9, caractérisé de plus en ce que le stade (4) comporte l'exposition à un rayonnement ultraviolet.

11. Procédé de préparation d'un adhésif autocollant suivant la revendication 1 comprenant les stades de:

(1) préparation d'une composition à base d'au moins un acrylate monomère substitué ou non substitué, ladite composition contenant un photo-amorceur et étant polymérisable en un adhésif autocollant,

(2) revêtement d'un support de la composition, et

(3) simultanément expansion et polymérisation du revêtement in situ en un adhésif autocollant pour former une membrane adhésive autocollante, et

(4) éventuellement enlèvement du support.

12. Procédé suivant la revendication 9 ou 11, caractérisé de plus en ce qu'un agent tensio-actif est incorporé à la composition en une quantité comprise dans la gamme de 0,5 à 5% du poids total des matières sèches.

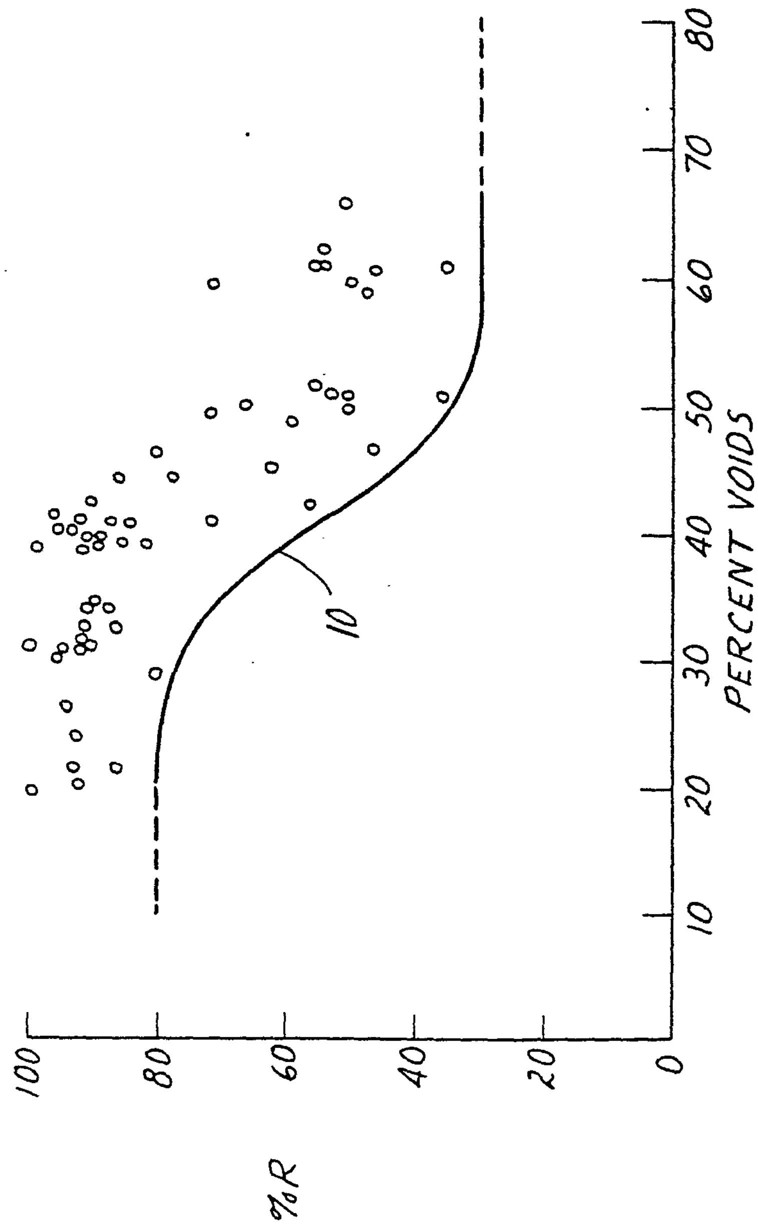


FIG.1

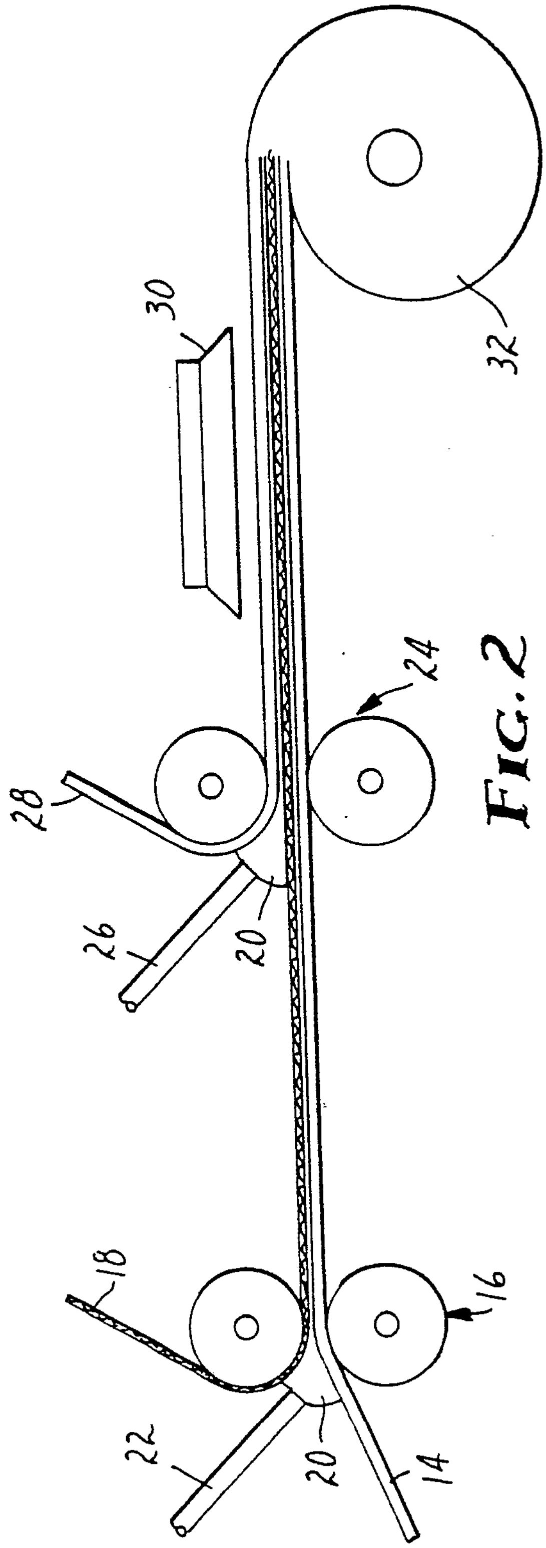


FIG. 2

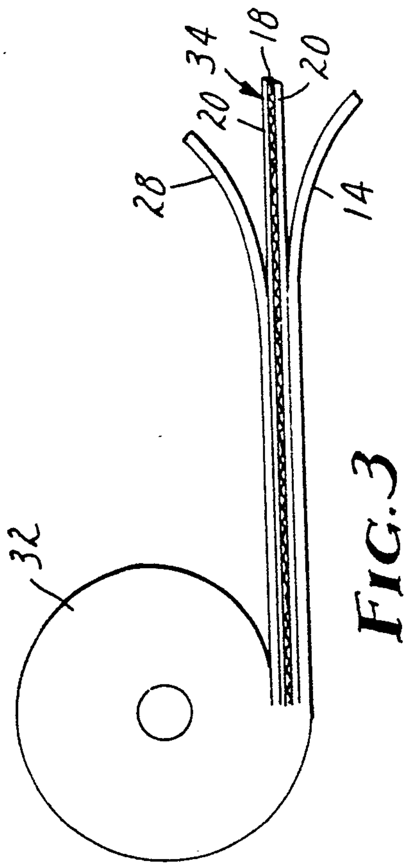


FIG. 3